# EUROPEAN PATENT APPLICATION

(11) **EP 3 890 204 A1**
(43) Date of publication of application: **06.10.2021**
(21) Application number: 19889278.8
(22) Date of filing: 21.10.2019
(51) Int. Cl.: H04B 7/06

(54) **RTK BASE STATION APPARATUS AND SIGNAL INTERACTION SYSTEM AND METHOD**

(30) Priority: 29.11.2018 CN 201811447998
(71) Applicant: Guangzhou Xaircraft Technology Co., Ltd, Tianhe District Guangzhou, Guangdong 510000 (CN)
(72) Inventor: LIANG, Tianyong, Guangzhou, Guangdong 510000 (CN); LIANG, Jie, Guangzhou, Guangdong 510000 (CN)
(74) Representative: Locas, Davide
(86) International application number: PCT/CN2019/112344
(87) International publication number: WO 2020/108167

(57) **Abstract**

Disclosed are an RTK base station apparatus and a signal interaction system and method. The apparatus comprises: a base station body, comprising a frame and a main control module; a top antenna located at the top of the frame of the base station body and being mainly for coverage of radio waves in the air; and a bottom antenna located at the bottom of the frame of the base station body and being mainly for coverage of radio waves on the ground. The main control module comprises an antenna selection unit. The antenna selection unit is in a communication connection with the top antenna and the bottom antenna, and is configured to alternately control according to a target coverage region of a signal to be sent, the top antenna and/or the bottom antenna to send the signal. The apparatus meets the requirements for both ground and air communication, and achieves comprehensive coverage of a communication range.

## Description

### Cross-Reference to Related Applications

The present disclosure claims priority to Chinese Patent Application No. 201811447998.4, filed with the Chinese Patent Office on November 29, 2018, entitled "RTK Base Station Apparatus and Signal Interaction System and Method", which is incorporated herein by reference in its entirety.

### Technical Field

Embodiments of the present disclosure relate to the technical field of unmanned aerial vehicles, and in particular to an RTK base station apparatus, and a signal interaction system and method.

### Background Art

With the popularity of unmanned aerial vehicles (UAVs), more and more users have begun to use UAVs (or drones) in various fields. Especially the use of UAVs in the RTK (Real-time kinematic) differential positioning technology has attracted more and more attention.

A prior art antenna does not generate spherical radiation energy centered on a point. After the antenna is installed in a device, its radiation pattern is likely to be deformed and may be weakened in some directions, thus there is a problem of radiation of energy to only part of an area or a problem of energy imbalance in different directions. As a result, full communication coverage cannot be achieved. The energy imbalance causes a longer communication distance in some directions and a shorter communication distance in some other directions.

### Summary

The embodiments of the present disclosure provide an RTK base station apparatus, and a signal interaction system and method.

In a first aspect, an embodiment of the present disclosure provides an RTK base station apparatus, comprising:
a base station body comprising a frame and a main control module;
a top antenna located at the top of the frame of the base station body and configured to cover radio waves in the air, the top antenna comprising a planar antenna unit; and
a bottom antenna located at the bottom of the frame of the base station body and configured to cover radio waves on the ground, the bottom antenna comprising a rod-shaped omnidirectional antenna unit,
wherein the main control module comprises an antenna selection unit; and the antenna selection unit is communicatively connected to each of the top antenna and the bottom antenna and is configured to control by switching, according to a target coverage area of a signal to be sent, the top antenna and/or the bottom antenna to send the signal to be sent.

In a second aspect, an embodiment of the present disclosure further provides a signal interaction system, comprising the RTK base station apparatus according to the first aspect of the embodiment of the present disclosure, an aircraft, and an antenna selection apparatus.

The antenna selection apparatus is configured to generate an antenna selection signal.

The RTK base station apparatus controls at least one of the top antenna and the bottom antenna to send a signal to be sent to the aircraft according to the received antenna selection signal.

In a third aspect, an embodiment of the present disclosure further provides a signal interaction method, implemented based on the RTK base station apparatus according to the first aspect of the embodiment of the present disclosure, the method comprising:
receiving an antenna selection signal by the main control module of the RTK base station apparatus;
sending a signal to be sent via both the top antenna and the bottom antenna when the antenna selection signal is a dual-channel transmission signal; and
sending the signal to be sent via the top antenna or via the bottom antenna when the antenna selection signal is a single-channel transmission signal.

### Brief Description of the Drawings

FIG. 1A is a schematic structural diagram of an RTK base station apparatus according to an embodiment of the present disclosure;
FIG. 1B is a schematic diagram showing the positions of arrangement of antennas in the RTK base station apparatus according to an embodiment of the present disclosure;
FIG. 2 is a radiation pattern of a planar antenna unit according to an embodiment of the present disclosure;
FIG. 3A is a radiation pattern of a rod-shaped omnidirectional antenna unit in a vertical plane according to an embodiment of the present disclosure;
FIG. 3B is a radiation pattern of the rod-shaped omnidirectional antenna unit in a horizontal plane according to an embodiment of the present disclosure;
FIG. 4 is a schematic diagram showing the connection relationship of a main control module according to an embodiment of the present disclosure;
FIG. 5 is a schematic structural diagram of a signal interaction system according to an embodiment of the present disclosure; and
FIG. 6 is a schematic flowchart of a signal interaction method according to an embodiment of the present disclosure.

### Detailed Description of the Embodiments

The present disclosure will be described in further detail below with reference to the accompanying drawings and embodiments. It can be understood that the embodiments described herein are merely intended to explain the present disclosure, but not intended to limit the present disclosure. In addition, it should be noted that the drawings only show a part of a structure related to the present disclosure instead of the whole structure for ease of description.

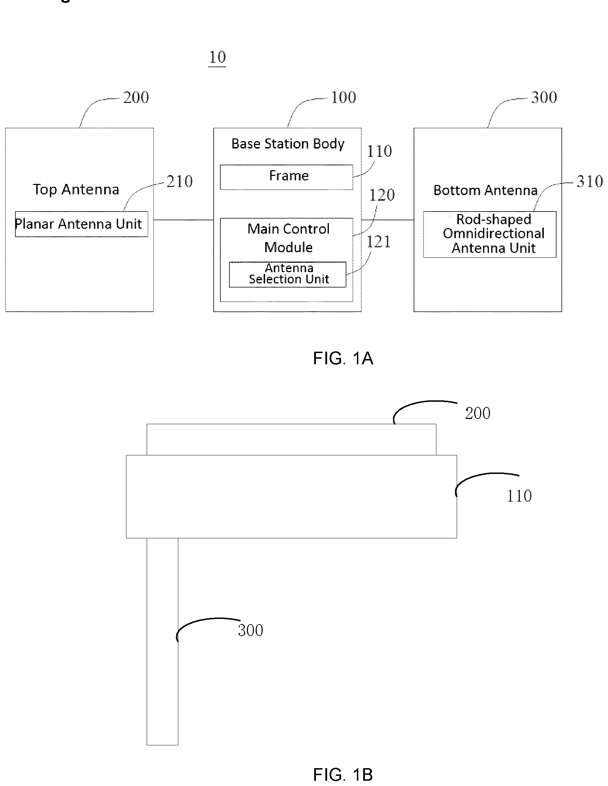

Referring to FIG. 1A in combination with FIG. 1B, FIG. 1A is a schematic structural diagram of an RTK base station apparatus 10 according to an embodiment of the present disclosure, and FIG. 1B is a schematic diagram showing the positions of arrangement of antennas in the RTK base station apparatus 10 according to an embodiment of the present disclosure.

In this embodiment, the RTK base station apparatus is configured to control by switching, according to a target coverage area of a signal to be sent, a top antenna and/or a bottom antenna to send the signal to be sent. Here, the antenna is a converter which converts guided waves propagating on a transmission line into electromagnetic waves propagating in an unbounded medium (usually a free space), or vice versa. The antenna is a component used in a radio device to transmit or receive electromagnetic waves. Any engineering systems which transmit information using electromagnetic waves, such as radio communication, broadcasting, television, radar, navigation, electronic countermeasure, remote sensing, and radio astronomy systems, are operated by means of antennas. In addition, in the transmission of energy with electromagnetic waves, non-signal energy is also radiated via an antenna. Generally, antennas are reversible. In other words, the same antenna can be used as both a transmitting antenna and a receiving antenna. The same antenna has the same basic characteristic parameters as a transmitter or receiver. In the embodiment of the present disclosure, signals can be received via the antenna that sends the signal to be sent.

With reference to FIGS. 1A and 1B, the RTK base station apparatus 10 according to this embodiment includes a base station body 100, a top antenna 200, and a bottom antenna 300. Here, the base station body 100 includes a frame 110 and a main control module 120.

Here, the frame 110 refers to an external physical structure of the base station body 100, in which the main control module 120 can be accommodated and the top antenna 200 and the bottom antenna 300 can also be installed. For example, the frame 110 may have a rectangular parallelepiped structure, a cylindrical structure, or any other structure with an inner space, in which the main control module 120, the top antenna 200, and the bottom antenna 300 can be installed.

The top antenna 200 is located at the top of the frame 110 of the base station body 100. The top antenna 200 includes a planar antenna unit 210 which is mainly used for covering radio waves in the air.

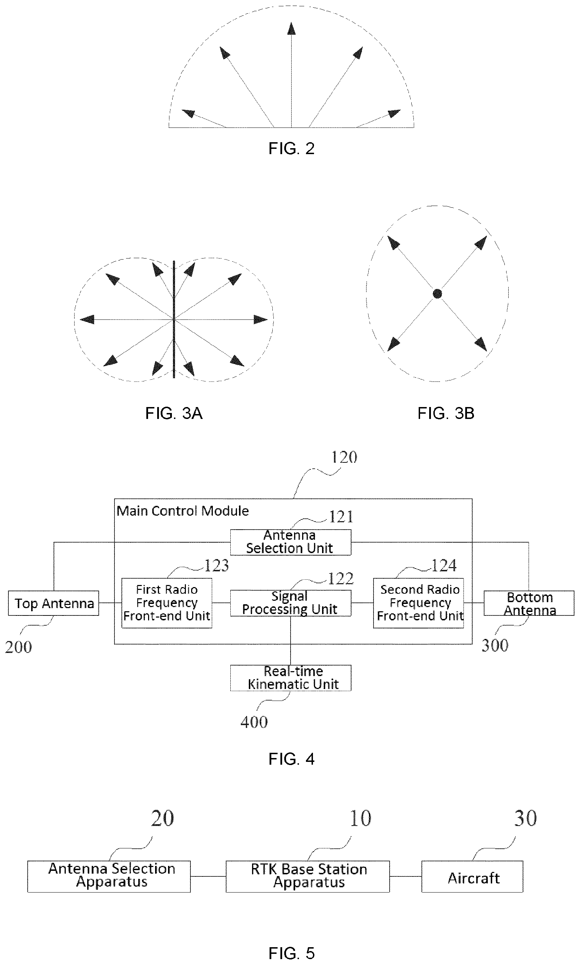

Here, for example, as shown in FIG. 2, the planar antenna unit 210 may radiate energy (have a radiation pattern) in the shape of an upper hemisphere, namely, a hemisphere with an opening facing downward. In this way, energy can be radiated mainly toward the air, which is mainly used for communication over the air. The top antenna 200 may include at least one of: a microstrip antenna with a real-time kinematic antenna module; a microstrip antenna for transmitting a general wireless communication signal; and a microstrip antenna for transmitting a dedicated wireless communication signal.

The bottom antenna 300 is located at the bottom of the frame 110 of the base station body 100. The bottom antenna 300 includes a rod-shaped omnidirectional antenna unit 310. For example, as shown in FIG. 3, the rod-shaped omnidirectional antenna unit 310 has an apple-shaped radiation pattern, wherein FIG. 3A shows a radiation pattern of the rod-shaped omnidirectional antenna unit 310 in a vertical plane, and FIG. 3B shows a radiation pattern of the rod-shaped omnidirectional antenna unit 310 in a horizontal plane.

With reference to FIG. 3, the rod-shaped omnidirectional antenna unit 310 has a rod-shaped core and radiates energy mainly toward the horizontal plane and can cover radio wave communications on the ground.

In this embodiment, the rod-shaped omnidirectional antenna unit 310 may be configured to transmit a dedicated wireless communication signal.

In this embodiment, the main control module 120 includes an antenna selection unit 121, and the top antenna 200 and the bottom antenna 300 are communicatively connected to the antenna selection unit 121, respectively. The antenna selection unit 121 is configured to control by switching, according to a target coverage area of a signal to be sent, the top antenna 200 and/or the bottom antenna 300 to send the signal to be sent.

For example, the antenna selection unit 121 may control at least one of the top antenna 200 and the bottom antenna 300 to send the signal to be sent according to the target coverage area of the signal to be sent.

In detail, the RTK base station apparatus 10 provides three antenna combination modes. Specifically, the signal to be sent is sent via the top antenna 200, the signal to be sent is sent via the bottom antenna 300, or the signal to be sent is sent via the top antenna 200 together with the bottom antenna 300. A specific mode in which the signal to be sent is to be sent may be determined according to the target coverage area required by the signal.

Here, the target coverage area may be an area where a target device for receiving the signal to be sent is arranged. The target device may include at least one of an aircraft, a server, a relay base station, and a mobile terminal.

Exemplarily, when the target device is a device located on the ground (e.g., a relay base station, a server, a mobile terminal, or the like), the target coverage area is a ground (or terrestrial) area (i.e., an area on the ground). For another example, when the target device is a device located in the air (e.g., an aircraft or the like), the target coverage area is an aerial area (i.e., an area in the air). For another example, when the target device includes a device located on the ground and a device located in the air, the target coverage area includes an aerial area and a ground area.

In an implementation process, the process of controlling by switching, by the antenna selection unit 121, the top antenna and/or the bottom antenna to send the signal to be sent according to the target coverage area of the signal to be sent may be implemented in the following processing manner.

The bottom antenna 300 is controlled to send the signal to be sent, in the case where the target coverage area is a ground area.

The top antenna 200 is controlled to send the signal to be sent, in the case that the target coverage area is an aerial area.

Both the top antenna 200 and the bottom antenna 300 are controlled to send the signal to be sent, in the case where the target coverage area includes an aerial area and a ground area.

In this embodiment, the RTK base station apparatus 10 may acquire the location of arrangement of the target device in many ways.

In an implementation, information on the location of the target device may be preset in the RTK base station apparatus 10, and the location of arrangement of the target device may be determined based on the location information so as to determine an area where the location of arrangement is located.

In another implementation, the RTK base station apparatus 10 may acquire positioning information of the target device and determine the location of arrangement of the target device based on the positioning information so as to determine an area where the target device is located. Here, the positioning information of the target device may be determined, for example, by a global positioning system (GPS) in the target device.

On the basis of the foregoing embodiment, the RTK base station apparatus 10 may further include a real-time kinematic (RTK) unit 400, wherein the real-time kinematic unit is configured to generate a data message which can be converted into a signal to be sent. The signal to be sent is a wireless signal that can be sent directly via an antenna.

Here, the data message may be data in RTCM (Radio Technical Commission for Maritime services), namely, data conforming to a standard established by the Radio Technical Commission for Maritime services. The real-time kinematic unit refers to a unit constructed based on a carrier phase differential technology. The carrier phase differential technology is a differential method for real-time processing of carrier phase observations from two measuring stations, for sending the carrier phase acquired by the reference station to the user receiver and obtaining a difference by the user receiver to calculate the coordinates.

Optionally, the real-time kinematic unit may generate data conforming to the standard established by the Radio Technical Commission for Maritime services, and the data may be converted or processed by a signal processing unit and a radio frequency (RF) front-end unit into the above-mentioned signal to be sent.

On the basis of the foregoing embodiment, as shown in FIG. 4, the main control module 120 may further include a signal processing unit 122, a first radio frequency front-end unit 123, and a second radio frequency front-end unit 124. The signal processing unit 122 may be connected to the top antenna 200 via the first radio frequency front-end unit 123, wherein the signal processing unit is configured to process the data message in a general wireless communication mode, and/or configured to process the data message in a dedicated wireless communication mode. The signal processing unit 122 may also be connected to the bottom antenna 300 via the second radio frequency front-end unit 124, wherein the signal processing unit 122 is configured to encapsulate the data message in a dedicated wireless communication mode.

Here, the signal processing unit 122 may encapsulate the data message in different modes. For example, the signal processing unit 122 may encapsulate the data message in a general wireless communication mode, or may encapsulate the data message in a dedicated wireless communication mode. Here, the wireless communication mode may include at least one of: a 3G communication mode, a 4G communication mode, a Bluetooth mode, and a wireless local area network (LAN) mode. The dedicated wireless communication mode may include a radio station communication mode and a dedicated wireless local area network mode.

Here, the first radio frequency front-end unit 123 and the second radio frequency front-end unit 124 are configured to amplify and filter the data message encapsulated by the signal processing unit 122 to obtain the signal to be sent. The first radio frequency front-end unit 123 and the second radio frequency front-end unit 124 may be set in the same manner. In other words, they may carry out the amplification and filtering of all types of signals, or they may only include the function of amplifying and filtering some types of signals corresponding to the types of the top antenna 200 and the bottom antenna 300 connected to them, respectively.

In detail, the signal processing unit encapsulates the data message in a general wireless communication mode or in a dedicated wireless communication mode, the encapsulated data message is amplified and filtered by the first radio frequency front-end unit 123 and/or the second radio frequency front-end unit 124 to obtain the signal to be sent, and then the signal to be sent is sent via the top antenna 200 and/or the bottom antenna 300.

In the embodiment of the present disclosure, a top antenna and a bottom antenna are arranged on the base station body, thereby ameliorating the prior art problem of failing to achieve full communication coverage due to radiation of energy to only part of an area, while meeting the requirements for ground and air communications and achieving full communication coverage.

FIG. 5 is a schematic structural diagram of a signal interaction system according to an embodiment of the present disclosure. As shown in FIG. 5, the signal interaction system includes the RTK base station apparatus 10 according to the forgoing embodiment, an aircraft 30, and an antenna selection apparatus 20.

The antenna selection apparatus 20 is configured to generate an antenna selection signal. The RTK base station apparatus 10 controls at least one of the top antenna 200 and the bottom antenna 300 to send a signal to be sent to the aircraft according to the received antenna selection signal.

Here, the antenna selection apparatus 20 may be a computer component, a mobile terminal, a remote control handle controlled by a user, or the like.

Optionally, the antenna selection apparatus 20 is configured to generate an antenna selection signal, where the antenna selection signal designates one or both of the antennas for the target coverage area. The antenna selection unit 121 in the main control module 120 receives the antenna selection signal and determines, according to the target coverage area of the signal to be sent, to send the signal to be sent via the top antenna 200 and/or the bottom antenna 300. After the determination is completed, the top antenna 200 and/or the bottom antenna 300 can be controlled to send the signal to be sent, since the antenna selection unit 121 is communicatively connected to each of the top antenna 200 and the bottom antenna 300.

The signal interaction system according to this embodiment comprises the RTK base station apparatus 10 described above and thus has the corresponding functions and advantageous effects.

It is worth noting that the aircraft 30 in this embodiment may be replaced with another device, such as the mobile terminal, the server, the relay base station or the like mentioned previously.

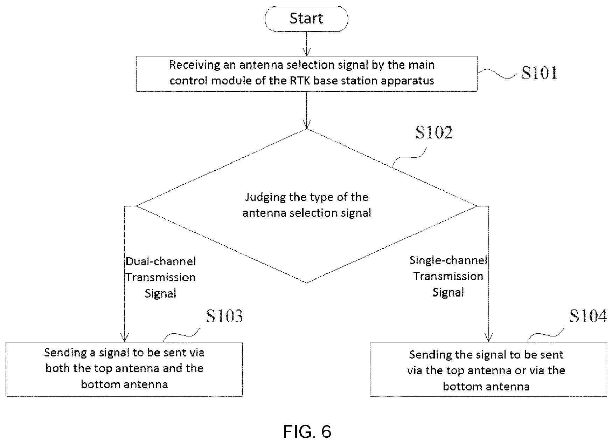

FIG. 6 is a schematic flowchart of a signal interaction method according to an embodiment of the present disclosure. The method may be implemented by the RTK base station apparatus 10 according to the foregoing embodiment. The method may be executed by the main control module 120 in the RTK base station apparatus 10. The main control module 120 may be implemented by means of hardware and/or software and may generally be integrated into the RTK base station apparatus 10. Referring to FIG. 6, this embodiment may include the following steps.

In S101, an antenna selection signal is received by the main control module 120 of the RTK base station apparatus 10.

Optionally, the antenna selection apparatus 20 is configured to generate an antenna selection signal, where the antenna selection signal designates one or both of the antennas as a transmitter. The antenna selection unit 121 in the main control module 120 receives the antenna selection signal and determines, according to the target coverage area of the signal to be sent (an aerial area, a ground area, or an aerial area combined with a ground area), to send the signal to be sent via at least one of the top antenna 200 and the bottom antenna 300. The detailed process of the determination may be performed with reference to the above related detailed description, and therefore will not be repeated here.

After the determination is completed, the antenna selection unit 121 may control the top antenna 200, or the bottom antenna 300, or both the top antenna 200 and the bottom antenna 300 to send the signal to be sent, since the antenna selection unit 121 is communicatively connected to each of the top antenna 200 and the bottom antenna 300.

In S102, the type of the antenna selection signal is judged, step S103 is executed if the antenna selection signal is a dual-channel transmission signal, and step S104 is executed if the antenna selection signal is a single-channel transmission signal.

In S103, the signal to be sent is sent via both the top antenna 200 and the bottom antenna 300.

Optionally, the main control module 120 analyzes the received antenna selection signal. If the antenna selection signal is a dual-channel transmission signal, the signal to be sent is sent via both the top antenna 200 and the bottom antenna 300.

In S104, the signal to be sent is sent via the top antenna 200 or via the bottom antenna 300.

Optionally, the main control module 120 analyzes the received antenna selection signal. When the antenna selection signal is a single-channel transmission signal, the signal to be sent is sent via the top antenna 200 or via the bottom antenna 300.

On the basis of the foregoing embodiment, the step S103 may include:
judging, by the main control module 120, whether the antenna selection signal is a signal for single-channel transmission to the air or a signal for single-channel transmission to the ground when the received antenna selection signal is a single-channel transmission signal; sending the signal to be sent via the top antenna 200 if the antenna selection signal is a signal for single-channel transmission to the air; and sending the signal to be sent via the bottom antenna 300 if the antenna selection signal is a signal for single-channel transmission to the ground.

In the embodiment of the present disclosure, a top antenna and a bottom antenna are arranged on the base station body, thereby solving the prior art problem of failing to achieve full communication coverage due to radiation of energy to only part of an area, while meeting the requirements for both ground and air communications and achieving full communication coverage.

It should be noted that the above description is merely illustrative of optional embodiments of the present disclosure and the technical principles used. It will be understood by those skilled in the art that the present disclosure is not limited to the specific embodiments described herein, and various apparent variations, readjustments, and replacements can be made by those skilled in the art without departing from the scope of the present disclosure as claimed. Therefore, although the present disclosure has been described in more detail by way of the above embodiments, the present disclosure is not limited to the above embodiments and can also include more other equivalent embodiments without departing from the concept of the present disclosure. The scope of the present disclosure is defined by the scope of the appended claims.

### Industrial Applicability

The RTK base station apparatus and the signal interaction system and method according to the embodiments of the present disclosure can meet the requirements for both ground and air communications and achieve full coverage over a communication range.

## Claims

1. An RTK base station apparatus, **characterized by** comprising:
a base station body, comprising a frame and a main control module;
a top antenna, wherein the top antenna is located at a top of the frame of the base station body and configured to cover radio waves in the air, and the top antenna comprises a planar antenna unit; and
a bottom antenna, wherein the bottom antenna is located at a bottom of the frame of the base station body and configured to cover radio waves on the ground, and the bottom antenna comprises a rod-shaped omnidirectional antenna unit,
wherein the main control module comprises an antenna selection unit, wherein the antenna selection unit is communicatively connected to each of the top antenna and the bottom antenna and is configured to control by switching, according to a target coverage area of a signal to be sent, the top antenna and/or the bottom antenna to send the signal to be sent.

2. The apparatus according to claim 1, wherein the planar antenna unit has a radiation pattern in a shape of a hemisphere with an opening facing downward.

3. The apparatus according to claim 1 or 2, wherein the target coverage area is an area where a target device for receiving the signal to be sent is arranged.

4. The apparatus according to claim 3, wherein the antenna selection unit controls by switching, according to the target coverage area of the signal to be sent, the top antenna and/or the bottom antenna to send the signal to be sent, comprising:
controlling the bottom antenna to send the signal to be sent in a case where the target coverage area is a ground area;
controlling the top antenna to send the signal to be sent in a case where the target coverage area is an aerial area; and
controlling both the top antenna and the bottom antenna to send the signal to be sent in a case where the target coverage area comprises an aerial area and a ground area.

5. The apparatus according to claim 3 or 4, wherein the target device comprises at least one of an aircraft, a server, a relay base station and a mobile terminal.

6. The apparatus according to any one of claims 1 to 5, wherein the RTK base station apparatus further comprises a real-time kinematic unit, wherein the real-time kinematic unit is configured to generate a data message, wherein the data message is able to be processed into the signal to be sent.

7. The apparatus according to claim 6, wherein the main control module further comprises a signal processing unit, a first radio frequency front-end unit, and a second radio frequency front-end unit,
wherein the signal processing unit is connected to the top antenna via the first radio frequency front-end unit, wherein the signal processing unit is configured to process the data message in a general wireless communication mode, and/or process the data message in a dedicated wireless communication mode; and
the signal processing unit is connected to the bottom antenna via the second radio frequency front-end unit, wherein the signal processing unit is configured to encapsulate the data message in a dedicated wireless communication mode.

8. The apparatus according to any one of claims 1 to 7, wherein the top antenna comprises at least one of:
a microstrip antenna with a real-time kinematic antenna module;
a microstrip antenna for transmitting a general wireless communication signal; and
a microstrip antenna for transmitting a dedicated wireless communication signal.

9. The apparatus according to any one of claims 1 to 8,
wherein the rod-shaped omnidirectional antenna unit is configured to transmit a dedicated wireless communication signal.

10. The apparatus according to any one of claims 7 to 9, wherein the first radio frequency front-end unit and the second radio frequency front-end unit are configured to amplify and filter the signal to be sent.

11. The apparatus according to any one of claims 7 to 10, wherein the general wireless communication mode comprises at least one of: a 3G communication mode, a 4G communication mode, a Bluetooth mode, and a wireless local area network mode.

12. The apparatus according to any one of claims 7 to 11, wherein the dedicated wireless communication mode comprises a radio station communication mode and a dedicated wireless local area network mode.

13. A signal interaction system, **characterized by** comprising the RTK base station apparatus according to any one of claims 1 to 12, an aircraft, and an antenna selection apparatus,
wherein the antenna selection apparatus is configured to generate an antenna selection signal; and
the RTK base station apparatus controls at least one of the top antenna and the bottom antenna to send a signal to be sent to the aircraft according to a received antenna selection signal.

14. A signal interaction method, **characterized in that** the signal interaction method is implemented based on the RTK base station apparatus according to any one of claims 1 to 12, and the method comprises:
receiving an antenna selection signal by the main control module of the RTK base station apparatus;
sending a signal to be sent via both the top antenna and the bottom antenna when the antenna selection signal is a dual-channel transmission signal; and
sending a signal to be sent via the top antenna or via the bottom antenna when the antenna selection signal is a single-channel transmission signal.

15. The method according to claim 14, wherein the sending a signal to be sent via the top antenna or via the bottom antenna when the antenna selection signal is a single-channel transmission signal comprises:
judging, by the main control module, whether the antenna selection signal is a signal for single-channel transmission to the air or a signal for single-channel transmission to the ground when a received antenna selection signal is a single-channel transmission signal;
sending the signal to be sent via the top antenna if the antenna selection signal is the signal for single-channel transmission to the air; and
sending the signal to be sent via the bottom antenna if the antenna selection signal is a signal for single-channel transmission to the ground.
